# EUROPEAN PATENT APPLICATION

(11) **EP 2 017 982 A1**
(43) Date of publication of application: **21.01.2009**
(21) Application number: 08160689.9
(22) Date of filing: 18.07.2008
(51) Int. Cl.: H04B 10/155, H04B 10/158

(54) **Optical transmission system**

(30) Priority: 20.07.2007 JP 2007189625
(71) Applicant: NEC Corporation, Minato-ku Tokyo 108-8001 (JP)
(72) Inventor: Shibutani, Makoto, Tokyo 108-8001 (JP)
(74) Representative: Betten & Resch

(57) **Abstract**

In the transmitting apparatus, phase modulation means phase-modulates a signal light from a signal source based on data. Polarization modulation means polarization-modulates the signal light which is phase-modulated by the phase modulation means so that the polarization directions of temporally adjacent unit data are orthogonal to each other. In the receiving apparatus, interference means causes the signal light transmitted from the transmitting apparatus to interfere with a signal light such that the signal light is delayed by an even number of unit data. Intensity detecting means detects the intensity of the signal light obtained by interference by the interference means to detect data.

## Description

This application is based upon and claims the benefit of priority from Japanese Patent Application No. 2007-189625 filed on July 20, 2007, the content of which is incorporated by reference.

### BACKGROUND OF THE INVENTION

### 1. Field of the Invention

The present invention relates to a signal transmission technology in an optical transmission system, and in particular, to a technology for improving the transmission characteristics of the optical transmission system.

### 2. Description of the Related Art:

An optical transmission system is required to transmit large volume of signals over long distance without relay. To realize a long distance transmission without relay, a reduction in the deterioration of a signal as much as possible in a transmission line is needed. Hitherto, there have been proposed various technologies to realize a long-distance and large capacity optical transmission.

Japanese Patent Laid-Open No. 11-355215 discloses a technology in which a signal light emitted from a light source is intensity modulated based on a transmission data and is still polarization modulated and transmitted so that the polarization directions of adjacent bits are orthogonal to each other. Japanese Patent Laid-Open No. 2005-260696 discloses a technology in which the phase of a signal light emitted from a light source is modulated in phase based on a transmission data and is still polarization modulated and transmitted so that the polarization directions of adjacent bits are orthogonal to each other. According to the technologies disclosed in Japanese Patent Laid-Open No. 11-355215 and Japanese Patent Laid-Open No. 2005-260696, the polarization directions of adjacent bits which temporally precede and succeed are orthogonal to each other, so that interaction between the adjacent bits in an optical fiber transmission line becomes small, which is substantially independent of the influence of a nonlinear optical effect in the optical fiber transmission line.

The above technologies, however, have the following problems.

According to the technologies disclosed in Japanese Patent Laid-Open No. 11-355215 and Japanese Patent Laid-Open No. 2005-260696, the distance over which signals can be transmitted by the optical transmission system without relay is extended. However, there is a strong need for a long distance over which signals can be transmitted in an optical communication field. Japanese Patent Laid-Open No. 11-355215 and Japanese Patent Laid-Open No. 2005-260696 draw attention mainly in technology for a transmitter but make no mention to a detection scheme for a receiver. For this reason, Japanese Patent Laid-Open No. 11-355215 and Japanese Patent Laid-Open No. 2005-260696 may not propose an appropriate system as the entire optical transmission system.

Japanese Patent Laid-Open No. 11-355215 and Japanese Patent Laid-Open No. 2005-260696 propose technologies for reducing the influence of distortion in waveform due to the nonlinear optical effect of an optical fiber. However, in addition to the above, the waveform of a signal light is widened by dispersion of the signal light on the optical fiber or by the influence of an optical spectrum narrowed by an optical filter. Furthermore, the phase noise of a light source also causes deterioration in transmission performance.

### SUMMARY OF THE INVENTION

It is an exemplary object of the present invention to improve a transmission performance.

To achieve the above object, according to an exemplary aspect of the invention, an optical transmission system transmitting a plurality of continuous data includes: a transmitting apparatus including a signal source, phase modulation means for phase-modulating a signal light from the signal source based on the data and polarization modulation means for polarization-modulating the signal light which is phase-modulated by the phase modulation means so that the polarization directions of temporally adjacent unit data are orthogonal to each other and for transmitting the signal light which is polarization-modulated by the polarization modulation means; and a receiving apparatus including interference means for receiving the signal light transmitted from the transmitting apparatus and for causing the signal light to interfere with a signal light in which the signal light is delayed by an even number of unit data, and intensity detecting means for detecting the light intensity of the signal light obtained by the interference of the interference means.

According to an exemplary aspect of the invention, in an optical transmission method in which a plurality of continuous data is transmitted by a light signal from a transmitting apparatus to a receiving apparatus, the transmitting apparatus includes the steps of: phase-modulating a signal light from a signal source based on the data; polarization-modulating the signal light which is phase-modulated so that the polarization directions of temporally adjacent unit data are orthogonal to each other; and transmitting the signal light which is polarization-modulated; and the receiving apparatus comprising the steps of: receiving the signal light transmitted from the transmitting apparatus; causing the signal light to interfere with a signal light in which the signal light is delayed by an even number of unit data; and detecting the light intensity of signal light obtained by the interference.

The above and other objects, features, and advantages of the present invention will become apparent from the following description with references to the accompanying drawings which illustrate examples of the present invention.

### BRIEF DESCRIPTION OF THE DRAWINGS

FIG. 1 is a block diagram illustrating the configuration of an optical transmission system according to a first exemplary embodiment;
FIG. 2 is a block diagram illustrating the configuration of an optical transmission system according to a second exemplary embodiment;
FIG. 3 is a block diagram illustrating the configuration of a concrete example of precoder 116;
FIG. 4 is a block diagram illustrating the configuration of a concrete example of interferometer 132;
FIG. 5 is a timing chart for describing the operation of the optical transmission system according to the second exemplary embodiment;
FIG. 6 is a block diagram illustrating the configuration of an optical transmission system of a modified example according to the second exemplary embodiment;
FIG. 7 is a block diagram illustrating the configuration of an optical transmission system according to a fourth exemplary embodiment;
FIG. 8 is a block diagram illustrating the configuration of a transmission apparatus 210 according to a fifth exemplary embodiment; and
FIG. 9 is a table showing patterns in which polarization directions appear in a sixth exemplary embodiment.

### DETAILED DESCRIPTION OF THE PREFERRED EMBODIMENTS:

An exemplary embodiment for carrying out the present invention is described in detail with reference to the drawings.

### (First Exemplary Embodiment)

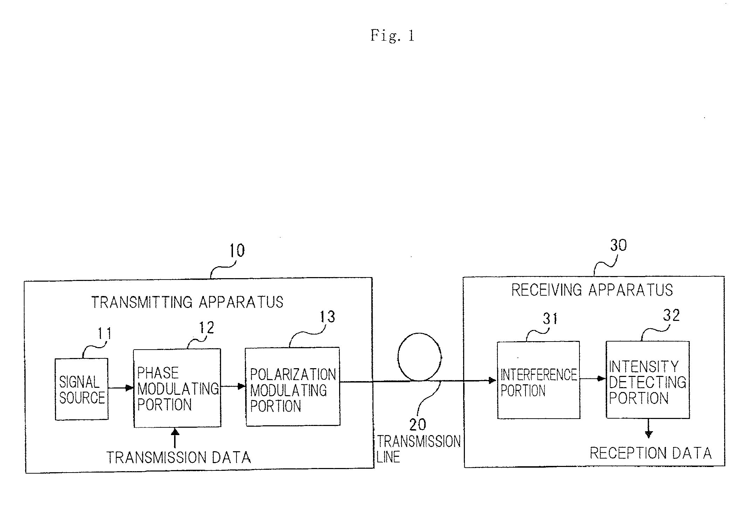

FIG. 1 is a block diagram illustrating the configuration of an optical transmission system according to a first exemplary embodiment. Referring to FIG. 1, the optical transmission system according to the present exemplary embodiment includes transmitting apparatus 10 and receiving apparatus 30. Transmitting apparatus 10 and receiving apparatus 30 are connected together through transmission line 20. Transmitting apparatus 10 includes signal source 11, phase modulating portion 12 and polarization modulating portion 13. The receiving apparatus 30 includes interference portion 31 and intensity detecting portion 32.

Signal source 11 in transmitting apparatus 10 is a light source for outputting a signal light with a predetermined wavelength on which a transmitting signal is based.

Phase modulating portion 12 applies a differential phase modulation based on the transmission data to the signal light from signal source 11. At this point, phase modulating portion 12 differentially codes all bits of the transmission data by a calculation performing not one by one, but on every other bit in a temporal order and phase-modulates the signal light in accordance with the obtained codes. Thus, receiving apparatus 30 performs a delay phase detection with a two-bit delay to provide a data signal modulated in intensity.

Polarization modulating portion 13 polarization modulates the signal light to which phase modulating portion 12 applies a differential phase modulation so that the polarization directions of temporally adjacent bits are orthogonal to each other.

The polarization-modulated signal light in polarization modulating portion 13 is output from transmitting apparatus 10 to transmission line 20. Transmission line 20 is an optical fiber transmission line. The signal light from the transmitting apparatus 10 is influenced by polarization dispersion or wavelength dispersion of the optical fiber and an optical spectrum narrowed by an optical filter to be widened in waveform and reaches receiving apparatus 30.

In receiving apparatus 30, the signal light received from transmitting apparatus 10 through transmission line 20 is input to interference portion 31.

Interference portion 31 is a two-bit delay Mach-Zehnder interferometer. Interference portion 31 separates the input signal light into two portions, delays one portion by two bits and then causes both portions to interfere with each other. If the bits of two signal lights that interfere to each other are in the same phase, they are emphasized, and if the bits of two signal lights are in the opposite phase, they are weakened, so that a phase-modulated signal light is converted to a signal light modulated in intensity by differential coding performed on every other bit.

Intensity detecting portion 32 detects the light intensity of the signal light converted to a signal light intensity that was modulated by interference portion 31 and outputs the intensity as a receiving data.

As described above, according to the present exemplary embodiment, transmitting apparatus 10 phase-modulates the signal light based on the transmission data, further polarization modulates the signal light so that the polarization directions of adjacent bits are orthogonal to each other and transmits it. When receiving apparatus 30 receives the signal light from transmitting apparatus 10, receiving apparatus 30 separates the input signal light into two portions, delays one portion by two bits, causes both portions to interfere with each other and detects the light intensity of the signal light obtained by interference. Consequently, the polarization modulation of transmitting apparatus 10 reduces the influence of noise from adjacent bits caused by a waveform being widened, and delay detection with two-bit delay in receiving apparatus 30 reduces the influence of phase noise.

Incidentally, optical communication is influenced by phase noise caused by the light source of laser, so that a delay detection which is comparatively resistant to phase noise may be preferably used rather than synchronous detection. Since the delay detection can be realized by a simpler configuration than synchronous detection, actual optical transmission systems using phase modulation mostly adopt the delay detection system. Delay detection of an optical signal is realized by interference. In the present exemplary embodiment, however, the polarization directions of the adjacent bits are orthogonal to each other, which do not cause interference, so that receiving apparatus 30 delays only even bits (two bits) to enable the application of delay detection by interference.

In the present exemplary embodiment, since transmitting apparatus 10 phase-modulates the signal light by the code obtained by differentially coding data through a calculation performed on every other bit, delay detection with an even-bit (two bits) delay of receiving apparatus 30 allows obtaining a data signal that is modulated in intensity. However, the present invention is not limited to the above configuration. As another example, transmitting apparatus 10 uses data as it is to phase-modulate the signal light and receiving apparatus 30 performs a delay-detection with a two-bit delay, thereafter, inverse transformation (decoding) of differential coding may be conducted through a calculation performed on every other bit.

### (Second Exemplary Embodiment)

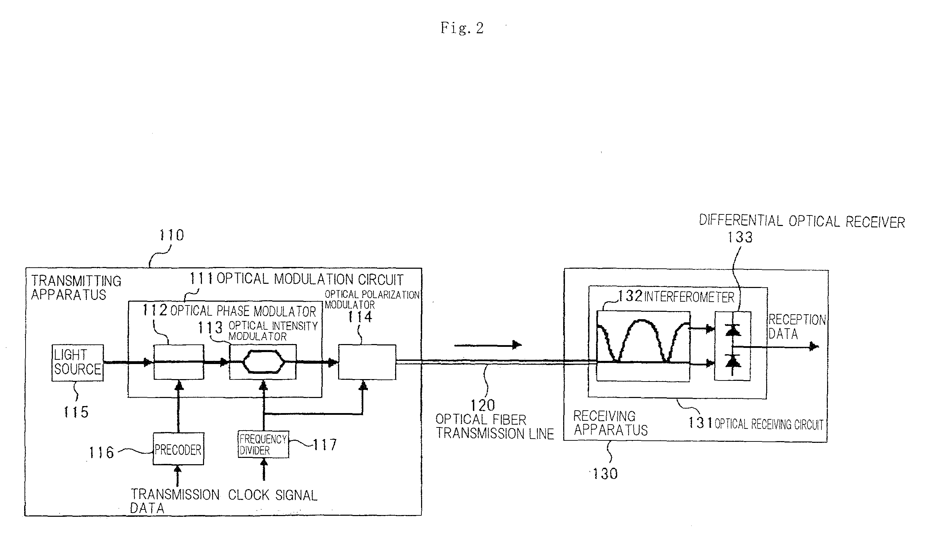

FIG. 2 is a block diagram illustrating the configuration of an optical transmission system according to a second exemplary embodiment. Referring to FIG. 2, the optical transmission system according to the present exemplary embodiment includes transmitting apparatus 110 and receiving apparatus 130. Transmitting apparatus 110 and receiving apparatus 130 are connected together through transmission line 120. Transmitting apparatus 110 includes optical modulation circuit 111, optical polarization modulator 114, light source 115, precoder 116 and frequency divider 117. Optical modulation circuit 111 includes optical phase modulator 112 and optical intensity modulator 113. Receiving apparatus 130 includes optical receiving circuit 131. Optical receiving circuit 131 includes interferometer 132 and differential optical receiver 133.

In transmitting apparatus 110, light source 115 generates a signal light with a predetermined wavelength on which a transmitting signal is based and transmits the signal light to optical phase modulator 112 in optical modulation circuit 111.

Precoder 116 differentially codes the bits of transmission data by a calculation performed on every other bit to generate a code string of differential codes formed every other bit. Specifically, precoder 116 repeats summation calculation on every bit of transmission data, the summation calculation is to calculate a sum of a bit of transmission data and a bit preceding by two from the bit. The code string generated by precoder 116 is sent to optical phase modulator 112 in optical modulation circuit 111.

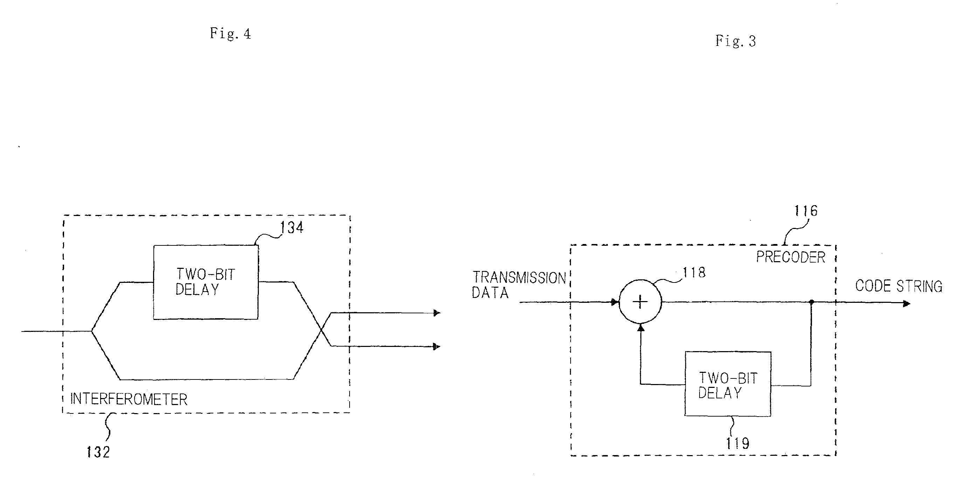

FIG. 3 is a block diagram illustrating the configuration of a concrete example of a precoder 116. Referring to FIG. 3, precoder 116 includes exclusive OR circuit 118 and two-bit delay circuit 119. Exclusive OR circuit 118 calculates an exclusive OR between the outputs of transmission data and two-bit delay circuit 119 and outputs the result. Two-bit delay circuit 119 delays the output of exclusive OR circuit 118 by two bits and inputs it to exclusive OR circuit 118. This configuration renders the code string output from exclusive OR circuit 118 as the input to optical phase modulator 112.

Frequency divider 117 halves a referential clock signal synchronized with the transmission data and sends the halved clock signal to optical intensity modulator 113 and optical polarization modulator 114.

Optical modulation circuit 111 is a so-called CSRZ-DPSK optical modulation circuit (CSRZ-DPSK stands for carrier suppressed return to zero-differential phase shift keying). Optical phase modulator 112 plays a role in DPSK modulation and optical intensity modulator 113 plays a role in CSRZ modulation.

Optical phase modulator 112 phase-modulates the signal light from light source 115 in accordance with the code string from precoder 116 and sends the obtained signal light to optical intensity modulator 113. The code string of an every-other-bit differential code from precoder 116 is used for phase modulation and receiving apparatus 130 performs a two-bit delay phase detection to enable providing a data signal that is modulated in intensity.

Optical intensity modulator 113 operates in synchronization with the frequency-halved clock signal and subjects the signal light from optical phase modulator 112 to a so-called return-to-zero (RZ) modulation which saves the center portion of each time slot and eliminates the front and the rear portion thereof. If a phase is reversed at the same time, i.e., if the input code strings are 1, 1, 1 and 1, optical intensity modulator 113 performs such a so-called carrier suppressed (CS) modulation in which a phase is reversed at every other bit, for example, π, -π, π and -π. The signal light modulated by optical intensity modulator 113 is sent to optical polarization modulator 114.

Optical polarization modulator 114 operates in synchronization with the halved clock signal and polarization-modulates the signal light from optical intensity modulator 113 so that the polarization directions of the adjacent bits are orthogonal to each other. The halved clock signal is an alternate current signal which alternately outputs 0 and 1 in synchronization with the signal light from optical intensity modulator 113. Optical polarization modulator 114 alternately changes the polarization directions of the signal light from optical intensity modulator 113 to V and H directions which are orthogonal to each other in accordance with the logic of the halved clock signal. For example, the V direction may be taken as a phase of 0 and the H direction may be taken as a phase of π/2.

The signal light from optical polarization modulator 114 is output to optical fiber transmission line 120. The signal light is influenced by polarization dispersion or wavelength dispersion on optical fiber transmission line 120 and an optical spectrum narrowed by an optical filter to be widened in waveform and reaches receiving apparatus 130.

The signal light from transmitting apparatus 110 through optical fiber transmission line 120 is input to interferometer 132 in receiving apparatus 130.

Interferometer 132 is a two-bit delay Mach-Zehnder interferometer. The difference calculation corresponding to a summation calculation in precoder 116 is included in the process of interferometer 132. Interferometer 132 separates the input signal light into two portions, delays the one by two bits and then causes both to interfere with each other. If the bits of two signal lights interfere to each other are in the same phase, they are emphasized, and if the bits of two signal lights are in the opposite phase, they are weakened, so that a phase-modulated signal light is converted to a signal light modulated in intensity by differential coding performed on every other bit.

FIG. 4 is a block diagram illustrating the configuration of a concrete example of interferometer 132. Referring to FIG. 4, two-bit delay circuit 134 is inserted into one of two routes of interferometer 132. Interferometer 132 causes the signal lights passing through the route with and without two-bit delay circuit 134 to interfere with each other.

Differential optical receiver 133 detects the light intensity of the signal light that was converted to the signal light intensity that is modulated by interferometer 132 and outputs it as reception data. Specifically, differential optical receiver 133 includes two photo receiving element connected in series. Two photo receiving element receive two signal lights output from interferometer 132 (Mach-Zehnder interferometer) respectively and output one electric signal.

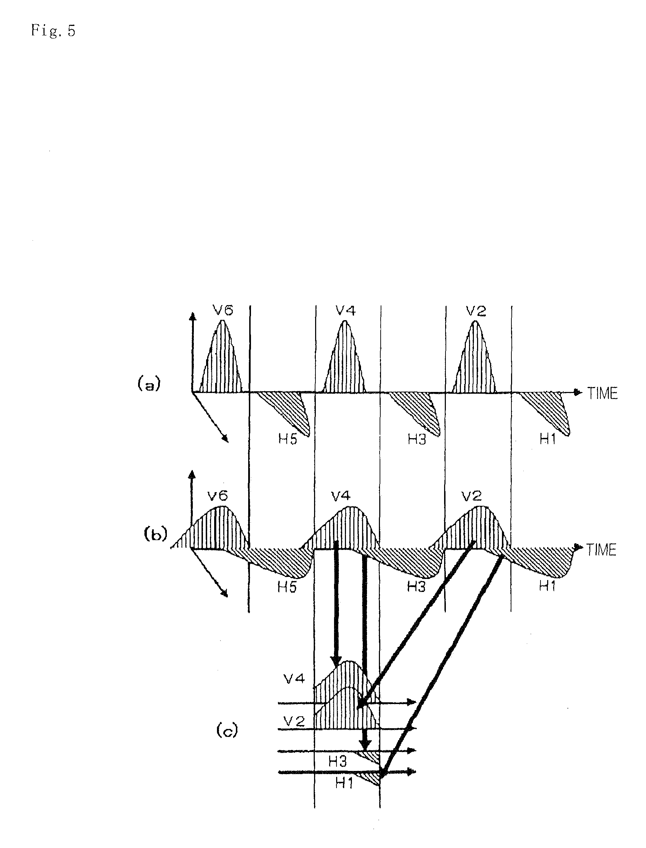

FIG. 5 is a timing chart for describing the operation of the optical transmission system according to the second exemplary embodiment. FIG. 5A illustrates waveforms of the signal light output from transmitting apparatus 110 to optical fiber transmission line 120. FIG. 5B illustrates waveforms of the signal light that passes through optical fiber transmission line 120 and that reaches receiving apparatus 130. FIG. 5C illustrates how the signal lights separated into two portions by interferometer 132 interfere with each other.

Transmitting apparatus 110 CSRZ-DPSK modulates the signal light and further polarization modulates the signal light so that the polarization directions of the adjacent bits are orthogonal to each other. As a result, as illustrated in FIG. 5A, the signal light in which the polarization directions of the adjacent bits are orthogonal to each other is output.

When the signal light from transmitting apparatus 110 passes through optical fiber transmission line 120, as illustrated in FIG. 5B, the signal light whose waveform is widened due to dispersion and the like reach receiving apparatus 130. For example, signal light H3 is widened to enter the time slot of signal light V4. Furthermore, signal light H1 is widened to enter the time slot of signal light V2.

Receiving apparatus 130 separates the received signal light into two portions, delays the one by two bits and then causes both to interfere with each other. As a result, as illustrated in FIG. 5C, for example, signal lights V4 and V2 interfere with each other. The portions of signal lights H3 and H1 enter the time slot, signal lights H3 and H1 interfere with each other. On the other hand, signal lights V4 and V2 do not interfere with signal lights H3 and H1.

For this reason, the output of interferometer 132 includes desired signals generated by signal lights V4 and V2 interfering with each other and noises generated by signal lights H3 and H1 interfering with each other. However, the level of signal lights H1 and H3 having entered the time slot of signal lights V4 and V2 is smaller than the level of signal lights V4 and V2. Consequently, the noise will not exert a significant influence on reception data output from differential optical receiver 133.

As described above, in the present exemplary embodiment, the signal light is polarization-modulated on a bit to bit in the optical transmission system using the CSRZ-DPSK optical modulation system to allow reduction of deterioration in transmission performance due to polarization dispersion or wavelength dispersion on optical fiber transmission line 120 and on a spectrum that is narrowed by an optical filter.

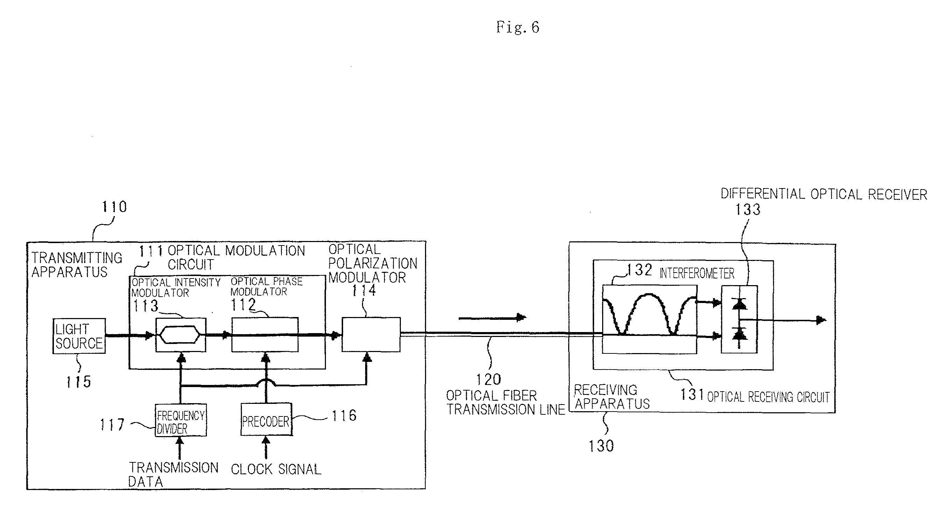

Incidentally, the present exemplary embodiment takes, as an example, transmitting apparatus 110 including optical intensity modulator 113 in the rear of optical phase modulator 112, however, the present invention is not limited to the configuration. Since the above intensity modulation (RZ modulation) and phase modulation (DPSK modulation) are processes performed independently of each other, optical intensity modulator 113 and optical phase modulator 112 may be reversed in order. FIG. 6 is a block diagram illustrating the configuration of an optical transmission system of a modified example according to the second exemplary embodiment. In the example illustrated in FIG. 6, optical intensity modulator 113 in optical modulation circuit 111 first CSRZ-modulates the signal light from light source 115 and then optical phase modulator 112 DPSK-modulates the output therefrom.

In the present exemplary embodiment, since transmitting apparatus 110 phase-modulates the signal light by the code obtained by differentially coding data by a calculation performed on every other bit, the delay phase detection with two bits delay of receiving apparatus 130 allows obtaining a signal light of data modulated in intensity. However, the present invention is not limited to the above configuration. As another example, transmitting apparatus 110 uses data as it is to phase-modulate the signal light and receiving apparatus 130 performs a delay phase detection with a two-bit delay, thereafter, inverse transformation of differential coding may be conducted by a calculation performed on every other bit. In that case, transmitting apparatus 110 does not need precoder 116. In receiving apparatus 130, on the other hand, a decoder is provided in the rear stage of differential optical receiver 133. The decoder performs calculation equivalent to the inverse operation of a differential operation in interferometer 132, that is to say, the decoder performs calculation equivalent to that in precoder 116.

### (Third Exemplary Embodiment)

The second exemplary embodiment exemplifies the optical transmission system of the CSRZ-DPSK optical modulation system, however, the present invention is not limited to the exemplary embodiment. The third exemplary embodiment introduces the optical transmission system of the RZ-DPSK optical modulation system as another example.

The optical transmission system of the third exemplary embodiment is the same in configuration as that of the second exemplary embodiment illustrated in FIG. 2. In the second exemplary embodiment, however, optical intensity modulator 113 performs the CSRZ modulation. On the other hand, in the third exemplary embodiment, optical intensity modulator 113 performs the RZ modulation.

Specifically, optical intensity modulator 113 according to the present exemplary embodiment operates in synchronization with the halved clock signal, leaves the center portion of bits in each time slot and eliminates the front and the rear portion thereof in the signal light from optical phase modulator 112. Incidentally, optical intensity modulator 113 does not change the phase of the signal light from optical phase modulator 112. In other words, if the input code strings are 1, 1, 1 and 1, the phase of each bit remains unchanged, for example, π, π, π and π even after the signal light has passed through optical phase modulator 112. That is to say, the third exemplary embodiment is different from the second exemplary embodiment in that the modulated phase of every other bit is not reversed, for example, π, -π, π and -π. The signal light modulated by optical intensity modulator 113 is sent to optical polarization modulator 114.

In the present exemplary embodiment, polarization modulation in transmitting apparatus 10, phase modulation in transmitting apparatus 10 and two-bit delay detection in receiving apparatus 30 in the optical transmission system using the RZ-DPSK optical modulation system allow reduction of deterioration in transmission performance due to dispersion on optical fiber transmission line 120 and on a spectrum that is narrowed by an optical filter.

Even in the present exemplary embodiment, intensity modulation (RZ modulation) and phase modulation (DPSK modulation) may be reversed in order.

### (Fourth Exemplary Embodiment)

The fourth exemplary embodiment exemplifies the optical transmission system of the DPSK optical modulation system. The transmitting apparatus of the fourth exemplary embodiment is different from those of the second and the third exemplary embodiment and does not perform an optical intensity modulation corresponding to CSRZ or RZ modulation.

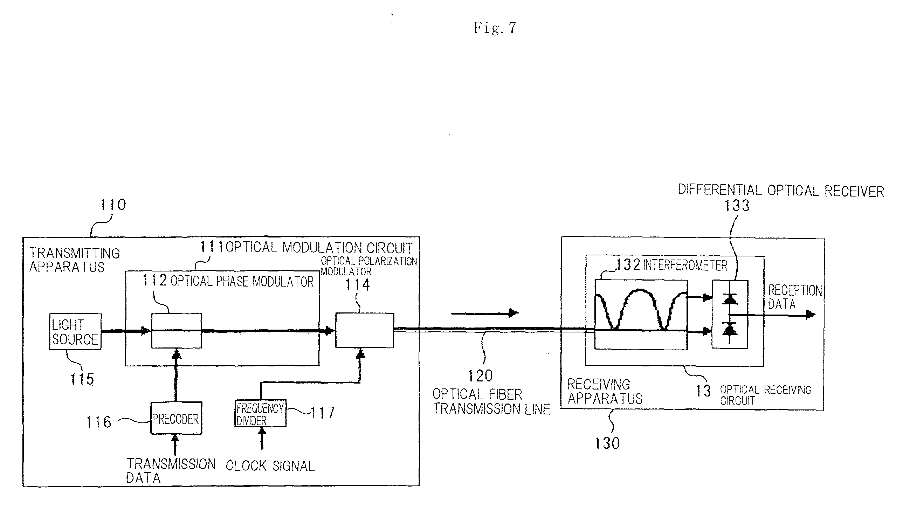

FIG. 7 is a block diagram illustrating the configuration of an optical transmission system according to the fourth exemplary embodiment. Referring to FIG. 7, the fourth exemplary embodiment is different from the second exemplary embodiment illustrated in FIG. 2 in that optical modulation circuit 111 does not include optical intensity modulator 113. In the present exemplary embodiment, optical phase modulator 112 phase-modulates the signal light from light source 115 in accordance with the code string from precoder 116 and sends the signal light obtained by phase modulation to optical polarization modulator 114.

In the present exemplary embodiment, polarization modulation in transmitting apparatus 110, phase modulation in transmitting apparatus 110 and two-bit delay detection in receiving apparatus 130 in the optical transmission system using the DPSK optical modulation system allow reduction of deterioration in transmission performance due to dispersion on optical fiber transmission line 120 and on a spectrum that is narrowed by an optical filter.

### (Fifth Exemplary Embodiment)

The fifth exemplary embodiment exemplifies a DQPSK optical modulation system (DQPSK stands for differential quadrature phase shift keying). The DQPSK optical modulation system causes four-valued data equivalent to two bits to correspond to four phase differences and subjects the data to a differential phase modulation. The above exemplary embodiments treat a bit representing a binary as a unit data, however, the present exemplary embodiment treats four-valued data corresponding to two bits as a unit data.

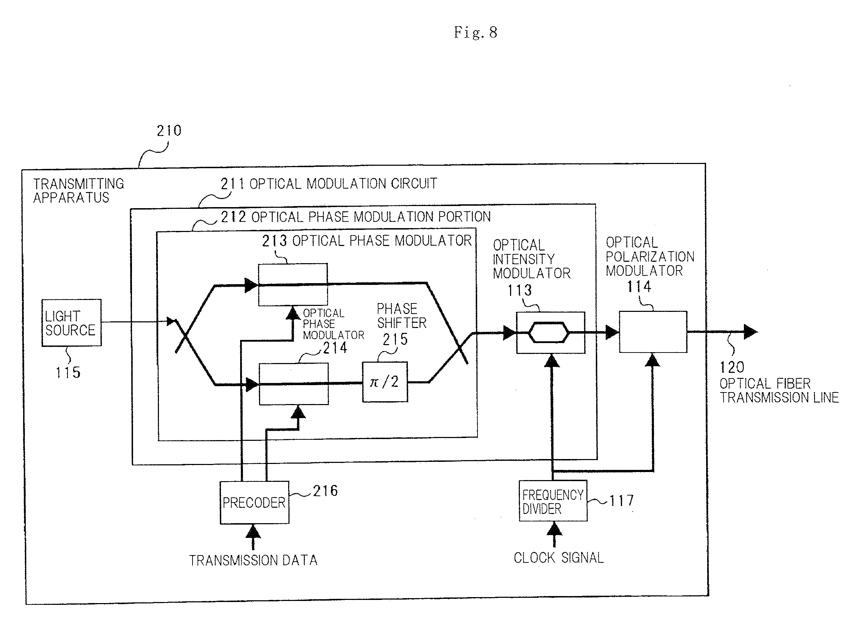

FIG. 8 is a block diagram illustrating the configuration of transmission apparatus 210 according to a fifth exemplary embodiment. Transmitting apparatus 210 includes optical modulation circuit 211, optical polarization modulator 114, light source 115, precoder 116 and frequency divider 117. Optical modulation circuit 211 includes optical phase modulation portion 212 and optical intensity modulator 113. Optical phase modulation portion 212 includes optical phase modulators 213 and 214 and phase shifter 215. Transmission apparatus 210 is different from transmission apparatus 110 in FIG. 2 in that optical phase modulation portion 212 is used instead of optical phase modulator 112 and precoder 216 is used instead of precoder 116. Incidentally, the DQPSK optical modulation system transmits two-bit data in a period of one clock using four-valued data. For this reason, the clock rate of the DQPSK optical modulation system is a half that of the DPSK optical modulation system if both have the same data rate.

Precoder 216 differentially codes four-valued data equivalent to two bits of transmission data through a calculation performed on every other data to generate a code string of four-valued differential code formed every other data. Specifically, precoder 216 repeats summation calculation on every bit of transmission data, the summation calculation is to calculate a sum of a bit of transmission data and a bit preceding by two from the bit. The two bits included in the four-valued code string generated by precoder 216 are sent to optical phase modulators 213 and 214 respectively.

Optical phase modulation portion 212 separates the signal light provided by light source 115 into two portions and inputs them to optical phase modulators 213 and 214.

Optical phase modulators 213 and 214 phase-modulate the signal light from light source 115 according to the code string from precoder 216 and output the phase-modulated signal light. The signal light output from optical phase modulators 213 and 214 is phase-modulated from 0 to π. Only the signal light output from optical phase modulator 214 is input to phase shifter 215. Phase shifter 215 shifts the phase of the input signal light by π/2. The signal light output from optical phase modulator 213 and the signal light which is output from optical phase modulator 214 and whose phase is shifted by phase shifter 215 are combined together and sent to optical intensity modulator 113. The combined signal light is turned into the DQPSK signal with four-valued phase of 0, π/2, π and 3π/2.

As is the case with the second exemplary embodiment illustrated in FIG. 2, the DQPSK signal is intensity modulated by optical intensity modulator 113, polarization modulated by optical polarization modulator 114 and sent out to optical fiber transmission line 120.

As described above, in the present exemplary embodiment, the signal light is polarization modulated on every bit in the optical transmission system using the DQPSK optical modulation system to allow reduction of deterioration in transmission performance due to polarization dispersion or wavelength dispersion on optical fiber transmission line 120 and on a spectrum that is narrowed by an optical filter.

Although the present exemplary embodiment exemplifies the four-valued DQPSK optical modulation system, the present invention is not limited to this system, but widely applicable to a multiple valued optical modulation system.

### (Sixth Exemplary Embodiment)

In the aforementioned exemplary embodiment, polarization modulating portion 13 or optical polarization modulator 114 performs a polarization modulation so that the polarization directions of adjacent bits are orthogonal to each other. Typically, as illustrated in FIG. 5A, the direction V of phase 0 and the direction H of phase π/2 alternately appear, for example. In the polarization modulation by polarization modulating portion 13 or by optical polarization modulator 114, however, the polarization direction may appear in other patterns as long as the polarization directions of temporally adjacent bits are orthogonal to each other. The sixth exemplary embodiment is an example in which a pattern on which the polarization direction appears in polarization modulation is modified.

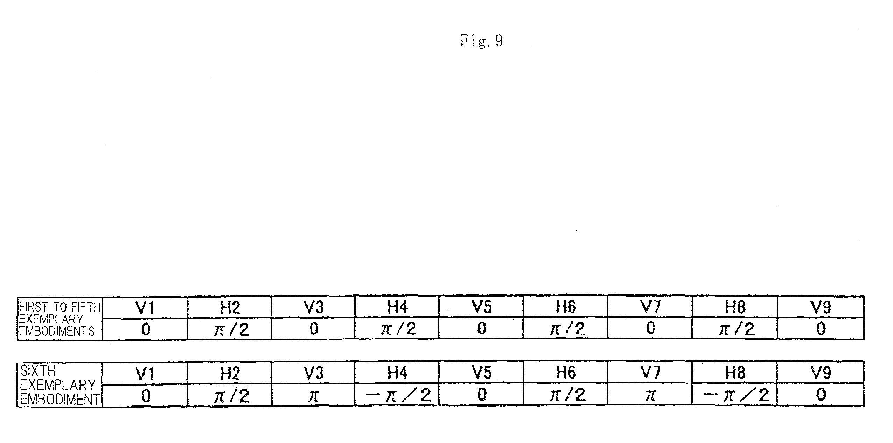

FIG. 9 is a table showing patterns in which polarization directions appear in the sixth exemplary embodiment. Referring to FIG. 9, in the first to fifth exemplary embodiments shown for comparison, two polarization directions of phases 0 and π/2 alternately appear. In the sixth exemplary embodiment, on the other hand, four polarization directions appear in the order of phase 0, π/2, π and -π/2. In other words, in the sixth exemplary embodiment, optical polarization modulator 114 performs a polarization modulation so that the polarization directions of temporally adjacent bits are orthogonal to each other and the polarization directions are reversed on every other bit.

While preferred exemplary embodiments of the present invention have been described using specific terms, such description is for illustrative purposes only, and it is to be understood that changes and variations may be made without departing from the spirit or scope of the following claims.

### In summary, an embodiment of the invention can be described as follows:

In the transmitting apparatus, phase modulation means phase-modulates a signal light from a signal source based on data. Polarization modulation means polarization-modulates the signal light which is phase-modulated by the phase modulation means so that the polarization directions of temporally adjacent unit data are orthogonal to each other. In the receiving apparatus, interference means causes the signal light transmitted from the transmitting apparatus to interfere with a signal light such that the signal light is delayed by an even number of unit data. Intensity detecting means detects the intensity of the signal light obtained by interference by the interference means to detect data.

## Claims

1. An optical transmission system in which continuous data is transmitted by a light signal, the optical transmission system comprising:
a transmitting apparatus including a signal source, phase modulation means for phase-modulating a signal light from the signal source based on the data, and polarization modulation means for polarization-modulating the signal light which is phase-modulated by the phase modulation means so that the polarization directions of temporally adjacent unit data are orthogonal to each other, and a transmitting apparatus transmits the signal light which is polarization-modulated by the polarization modulation means; and
a receiving apparatus including interference means for receiving the signal light transmitted from the transmitting apparatus and for causing the signal light to interfere with a signal light such that the signal light is delayed by an even number of unit data, and intensity detecting means for detecting the light intensity of the signal light obtained by the interference of the interference means.

2. The optical transmission system according to claim 1, wherein
the interference means causes the signal light to interfere with a signal light such that the signal light is delayed by two unit data.

3. The optical transmission system according to claim 2, wherein
the phase modulation means of the transmitting apparatus differentially codes the unit data by operation performed on every other unit data and phase-modulates the signal light from the signal source by using the obtained code string.

4. The optical transmission system according to any one of claims 1 to 3, wherein
the transmitting apparatus further includes intensity modulating means for performing such pulse modulation that saves the center portion of each time slot of the signal light, and that eliminates the front and the rear portion thereof, before or after phase modulation.

5. The optical transmission system according to any one of claims 1 to 4, wherein
the phase modulation means uses a two-phase differential phase modulation scheme, a four-phase differential phase modulation scheme or multiple-phase differential phase modulation scheme.

6. An optical transmission method for transmitting continuous data from a transmitting apparatus to a receiving apparatus by a light signal, wherein
in the transmitting apparatus:
phase-modulate a signal light from a signal source based on the data;
polarization-modulate the signal light which is phase-modulated so that the polarization directions of temporally adjacent unit data are orthogonal to each other; and
transmitts the signal light which is polarization-modulated; and in the receiving apparatus:
receives the signal light transmitted from the transmitting apparatus;
causes the signal light to interfere with a signal light that the signal light is delayed by an even number of unit data; and
detects the light intensity of signal light obtained by the interference.

7. The optical transmission method according to claim 6, wherein
the receiving apparatus causes the signal light to interfere with a signal light such that the signal light is delayed by two unit data.

8. The optical transmission method according to claim 7, wherein
the transmitting apparatus differentially codes the unit data by operation performed on every other unit data and phase-modulates the signal light from the signal source by using the obtained code string.

9. The optical transmission method according to any one of claims 6 to 8, wherein
the transmitting apparatus performs such pulse modulation that saves the center portion of each time slot of the signal light, and eliminates the front and the rear portion thereof, before or after phase modulation.

10. The optical transmission method according to any one of claims 6 to 9, wherein
the transmitting apparatus uses a two-phase differential phase modulation scheme, a four-phase differential phase modulation scheme or a multiple-phase differential phase modulation scheme.

11. A transmitting apparatus of an optical transmission system in which continuous data is transmitted by a light signal, the transmitting apparatus comprising:
a signal source;
phase modulation means for phase-modulating a signal light from the signal source based on the data; and
polarization modulation means for polarization-modulating the signal light which is phase-modulated by the phase modulation means so that the polarization directions of temporally adjacent unit data are orthogonal to each other; and
the transmitting apparatus transmitting the signal light which is polarization-modulated by the polarization modulation means.

12. A receiving apparatus of an optical transmission system in which continuous data is transmitted by a light signal, the receiving apparatus comprising:
interference means for causing the signal light transmitted from the transmitting apparatus to interfere with a signal light such that the signal light is delayed by an even number of unit data; and
intensity detecting means for detecting the light intensity of the signal light obtained by the interference of the interference means.
